# EUROPEAN PATENT APPLICATION

(11) **EP 3 299 206 A1**
(43) Date of publication of application: **28.03.2018**
(21) Application number: 16814491.3
(22) Date of filing: 24.06.2016
(51) Int. Cl.: B60K 35/00, G02B 27/01, H04N 5/64, B60R 11/02

(54) **DISPLAY APPARATUS**

(30) Priority: 24.06.2015 JP 2015126253
(71) Applicant: Pioneer Corporation, Tokyo 113-0021 (JP); Tohoku Pioneer Corporation, Tendo-shi, Yamagata 994-8585 (JP)
(72) Inventor: WATANABE Hiroaki, Tendo-shi Yamagata 994-8585 (JP); CHONAN Ryosuke, Tendo-shi Yamagata 994-8585 (JP); SHOJI Masanori, Tendo-shi Yamagata 994-8585 (JP); KAWAMURA Kenji, Tendo-shi Yamagata 994-8585 (JP)
(74) Representative: Manitz Finsterwald Patentanwälte PartmbB
(86) International application number: PCT/JP2016/068848
(87) International publication number: WO 2016/208722

(57) **Abstract**

The present invention is a display apparatus including a housing, a display member, a support member that supports the display member, a driving unit, and a transmission member that is moved along a side surface of the housing by driving of the driving unit and transmits driving force of the driving unit to the support member, wherein the support member moves the display member into and out of the housing by moving of the transmission member, the support member includes a rotation axis, a first fulcrum that is located a first distance away from the rotation axis, and a second fulcrum that is located a second distance away from the rotation axis, the second distance being greater than the first distance, and the transmission member moves either one of the first fulcrum and the second fulcrum and then moves the other of the first fulcrum and the second fulcrum.

## Description

### TECHNICAL FIELD

The present invention relates to a display apparatus including a mechanism for moving a display member.

### BACKGROUND ART

A head-up display (hereinafter, described as a "HUD") mounted near a driver's seat of a vehicle has been known. For example, Patent Literature 1 describes an HUD apparatus including a combiner accommodation device.

### CITATION LIST

### PATENT LITERATURE

Patent Literature 1: Japanese Patent Application Laid-Open No. 2014-125131

### SUMMARY OF INVENTION

### TECHNICAL PROBLEM

If an HUD apparatus such as that of Patent Literature 1 is mounted on a vehicle, the combiner is retracted inside the HUD apparatus when the vehicle is stopped. When the engine is started, the combiner is activated to enter a state of being erected outside the HUD apparatus (hereinafter, referred to as a "display operation state"). The combiner therefore needs to move quickly into the display operation state upon start of the engine of the vehicle, and high movement speed is desired. Meanwhile, the combiner is desirably capable of fine adjustments in position since the appropriate position of the combiner in the display operation state varies with the stature and posture of the driver.

The foregoing are examples of the problems to be solved by the present invention. An object of the present invention is to provide a display apparatus (HUD apparatus) that quickly shifts its combiner into the display operation state and of which the position of the combiner can easily be fine adjusted.

### SOLUTION TO PROBLEM

The invention according to claim 1 is a display apparatus including a housing, a display member, a support member that supports the display member, a driving unit, and a transmission member that is moved along a side surface of the housing by driving of the driving unit and transmits driving force of the driving unit to the support member, wherein the support member moves the display member into and out of the housing by moving of the transmission member, the support member includes a rotation axis, a first fulcrum that is located a first distance away from the rotation axis, and a second fulcrum that is located a second distance away from the rotation axis, the second distance being greater than the first distance, and the transmission member moves either one of the first fulcrum and the second fulcrum and then moves the other of the first fulcrum and the second fulcrum.

### BRIEF DESCRIPTION OF DRAWINGS

FIG. 1A is a perspective view showing a display operation state of an HUD according to an embodiment.
FIG. 1B is a perspective view showing a non-display operation state of the HUD according to the embodiment.
FIG. 1C is a partially transparent perspective view showing the non-display operation state of the HUD according to the embodiment.
FIG. 2A is a perspective view showing an internal configuration of the HUD in the non-display operation state.
FIG. 2B is an enlarged view showing the internal configuration of the HUD in the non-display operation state.
FIG. 3A is a perspective view showing the internal configuration of the HUD in the display operation state.
FIG. 3B is an enlarged view showing the internal configuration of the HUD in the display operation state.
FIG. 4A is a perspective view showing the internal configuration of the HUD during angle adjustment.
FIG. 4B is an enlarged view showing the internal configuration of the HUD during angle adjustment.

### DESCRIPTION OF EMBODIMENTS

In a preferred embodiment of the present invention, a display apparatus includes a housing that has a pair of opposed side surfaces, a display member, a support member that supports the display member and is held by the housing so as to be rotatable about a rotation axis, and a transmission member that is slidable along a side surface of the housing and is engaged with the support member, wherein the support member includes a first fulcrum that is located a first distance from the rotation axis and comes into engagement with the transmission member, and a second fulcrum that is located a second distance from the rotation axis and comes into engagement with the transmission member, the second distance being greater than the first distance.

In the foregoing display apparatus, even if a driving unit is driven at the same speed, the first fulcrum close to the rotation axis of the support member can be moved to move the display member at high operation speed, and the second fulcrum far from the rotation axis of the support member can be moved to move the display member at slow operation speed.

According to an aspect of the foregoing display apparatus, the amount of movement of the display member with respect to the amount of movement of the first fulcrum is greater than the amount of movement of the display member with respect to the amount of movement of the second fulcrum. As a result, both the movement of the display member at high operation speed and fine adjustments in position can be achieved even if the driving unit is driven at the same speed.

### Embodiment

A preferred embodiment of the present invention will be described below with reference to the drawings.

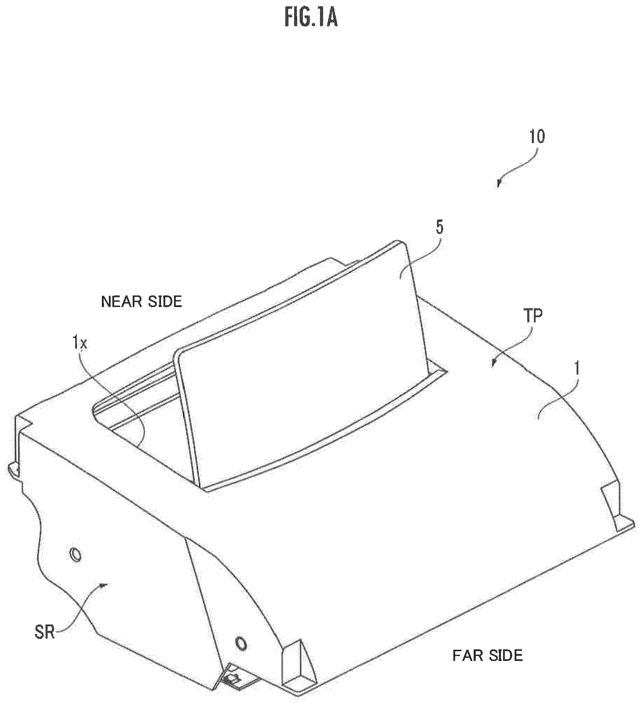

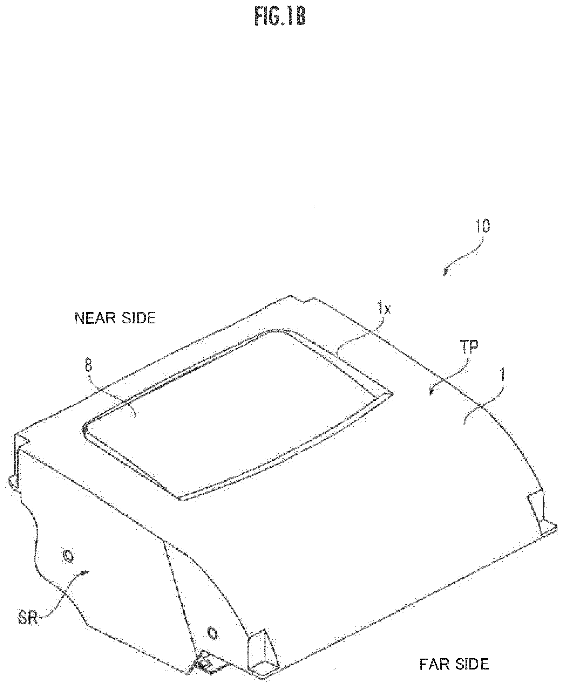

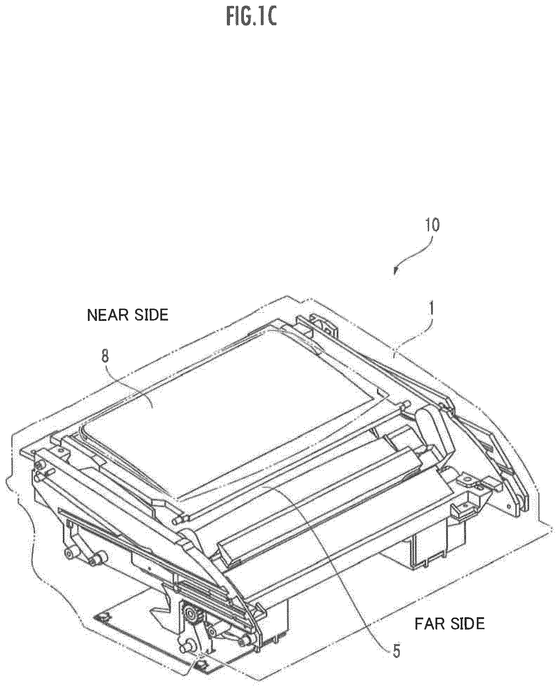

FIG. 1 shows an appearance of an HUD 10 according to the embodiment. FIG. 1A shows the appearance of the HUD 10 in a display operation state. FIG. 1B shows the appearance of the HUD 10 in a non-display operation state. FIG. 1C shows an internal configuration of the HUD 10 in the non-display operation state.

If the HUD 10 is installed in the dashboard of a vehicle, the "far side" in FIGs. 1A to 1C comes to the windshield side of the vehicle, and the "near side" to the seat side. The user (driver) is thus positioned on the near side with respect to the HUD 10.

As shown in FIG. 1A, in the display operation state, a combiner 5 of the HUD 10 is protruded and erected from a housing 1. Specifically, an opening 1x is formed in the top surface of the housing 1, i.e., a top plate portion TP, and the combiner 5 is erected in the opening 1x. In other words, the combiner 5 protrudes outward from inside the housing 1 via the opening 1x. The housing includes a pair of side portions SR which extend perpendicularly to the top plate portion TP from ends of the top plate portion TP and extend in the far side direction and the near side direction, and form side surfaces opposed to each other.

The combiner 5 is a plate-like translucent member. The plate surface of the combiner 5 is curved to be convex in one direction (far side). For example, the combiner 5 is configured to form a virtual image in a region of space on the convex surface side if irradiation light is incident from the convex surface side.

As shown in FIG. 1B, in the non-display operation state, the combiner 5 is retracted in the housing 1 for protection from damage and stains. Specifically, after the combiner 5 is retracted into the housing 1, the opening 1x is closed by a cover 8. Specifically, as shown in FIG. 1C, in the non-display operation state, the combiner 5 is retracted inside the housing 1 below the opening 1x, and the opening 1x is closed by the cover 8 lying above the combiner 5. In the display operation state shown in FIG. 1A, the cover 8 is retracted to the far side of the erected combiner 5 inside the housing 1.

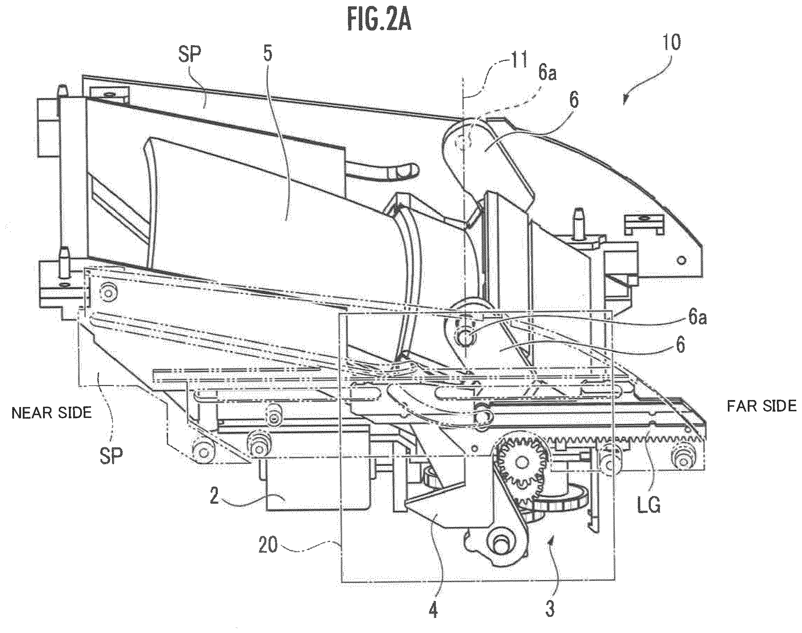

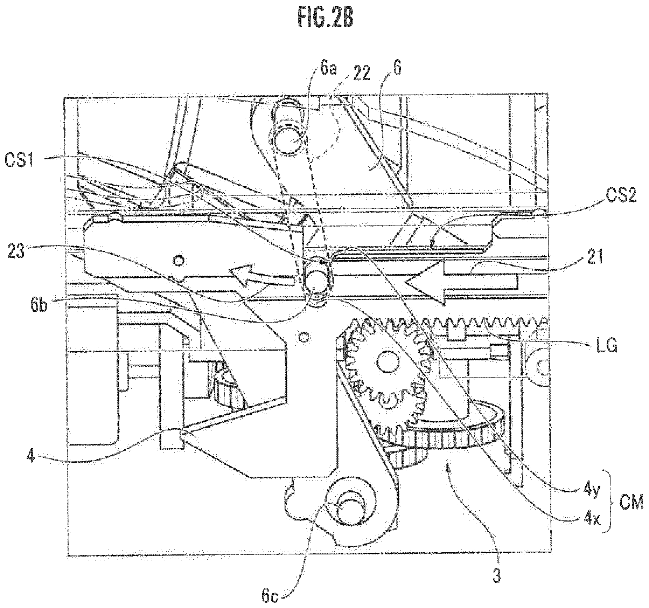

FIG. 2A is a perspective view showing the internal configuration of the HUD 10 in the non-display operation state. For convenience of illustration, the housing 1 and the cover 8 are omitted in FIG. 2A. FIG. 2B is an enlarged view of the part shown by a dashed-dotted line 20 in FIG. 2A.

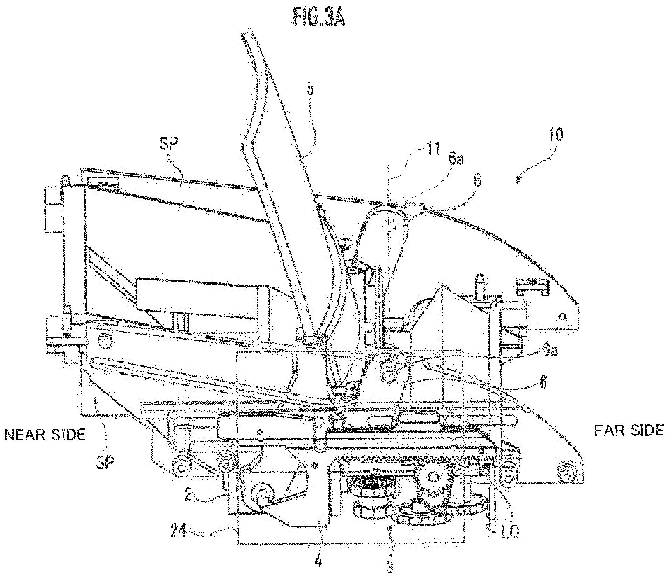

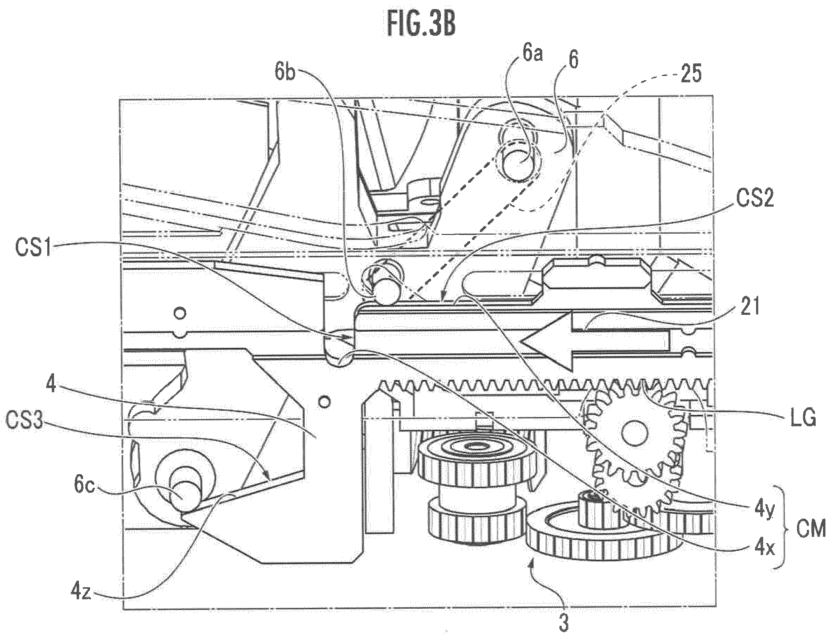

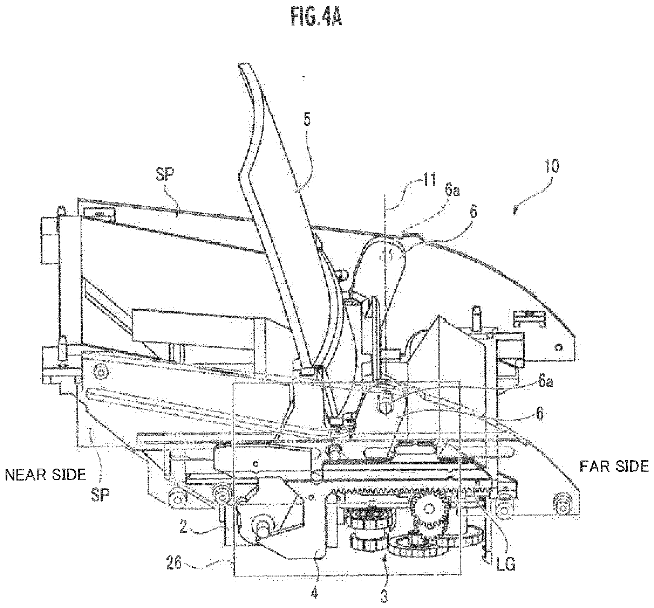

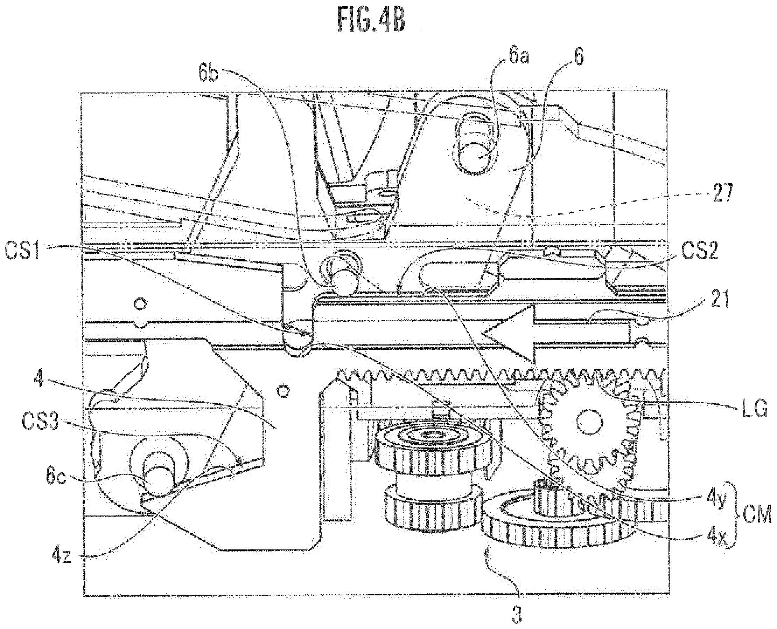

As shown in FIG. 2A, the HUD 10 includes a pair of side plate portions SP extending from the near side to the far side of the HUD 10, a motor 2, a driving unit 3, a drive lever 4 including a rack gear LG, the combiner 5, and a combiner support 6. In FIGs. 2A and 2B and in FIGs. 3A, 3B, 4A, and 4B to be described below, the side plate portion SP on the near side of the plane of each diagram is shown by double-dotted dashed lines in a transparent manner so that the internal configuration is clearly shown. The driving unit 3 includes a gear train in which a plurality of gears are combined to mesh with each other. The gear arranged on one end of the gear train meshes with a gear (not shown) provided on a rotating shaft (not shown) of the motor 2, and the gear arranged on the other end meshes with the rack gear LG of the drive lever 4.

The drive lever 4 is engaged with one of the opposed side plate portions SP so as to be slidable in the near side direction and the far side direction of the HUD 10. Specifically, if the motor 2 is driven, the driving force is transmitted to the drive lever 4 via the driving unit 3, and the drive lever 4 is horizontally moved along the side plate portion SP, or equivalently, along the side portion SR (see FIGs. 1A and 1B) of the housing 1.

A cam portion CM serving as a first cam structure is formed on an upper side surface of the drive lever 4. The cam portion CM includes a groove 4x which is formed in the upper side surface of the drive lever 4 and forms a cam surface CS1 serving as a first surface of the cam portion CM. As shown in the figures, the cam surface CS1 is formed by a far-side side surface of the groove 4x. The cam surface CS1 is formed to extend at an angle with respect to a sliding direction 21 (direction of an arrow 21 in FIG. 2B) of the drive lever 4.

The cam portion CM includes a horizontal portion 4y including a cam surface CS2 which is formed on the upper side surface of the drive lever 4 to be continuous with the cam surface CS1, i.e., continuous with a far-side end portion of the groove 4x, extends in the far side direction of the HUD 10, and serves as a second surface. The cam surface CS2 extends at an angle smaller than that of the cam surface CS1 with respect to the sliding direction of the drive lever 4. For example, FIGs. 2A and 2B show a case in which the cam surface CS1 is perpendicular to the sliding direction 21 and the cam surface CS2 extends in a direction parallel to the sliding direction 21.

The lower end portion of the combiner 5 is fixed to the combiner support 6, and the combiner 5 moves integrally with the combiner support 6. A pair of protrusions 6a are provided on the combiner support 6. The pair of protrusions 6a are fitted into not-shown recesses of the housing 1 and rotatably fixed to the housing 1.
That is, the combiner support 6 supports the combiner 5 and is held by the housing 1 to be rotatable about a rotation axis 11 passing through the pair of protrusions 6a. In other words, the combiner 6 rotates along an arcuate track about the rotation axis 11.

Protrusions 6b and 6c are further provided on the combiner support 6. In the non-display operation state, the protrusion 6b of the combiner support 6 is caught in the groove 4x of the drive lever 4. A positional relationship between the protrusions 6a and 6b in the non-display operation state is shown by a broken line 22.

In the foregoing configuration, the combiner 5 is an example of a display member according to the present invention. The combiner support 6 is an example of a support member according to the present invention. The drive lever 4 is an example of a transmission member according to the present invention. The rotation axis 11 of the combiner support 6 corresponds to a rotation axis according to the present invention. The protrusion 6b corresponds to a first fulcrum according to the present invention. The protrusion 6c corresponds to a second fulcrum according to the present invention.

An operation for shifting the combiner 5 from the non-display operation state to the display operation state (hereinafter, also referred to as an "upstand operation") at engine start time and the like will be described below. In the upstand operation, the rotating force of the motor 2 is converted into the driving force of the driving unit 3. The driving force of the driving unit 3 is transmitted to the drive lever 4, and the drive lever 4 moves horizontally along the side surface of the housing in the direction shown by the arrow 21 in FIG. 2B. As described above, in the non-display operation state, the protrusion 6b of the combiner support 6 is caught in the groove 4x of the drive lever 4. The drive lever 4 moves in the direction of the arrow 21, whereby the protrusion 6b of the combiner support 6 is pushed via the cam surface CS1 to move in the direction of the arrow 21. The protrusion 6b of the combiner support 6 thus rotates as shown by an arrow 23, with the position of the protrusion 6a as the rotation axis (rotation axis 11).

As a result, the combiner 5 rotates clockwise and stands up and the HUD 10 enters the display operation state. The display operation state refers to a state such that the combiner 5 protrudes from inside the housing 1 via the opening 1x and information is displayed on the combiner 5 or information can be displayed on the combiner 5.

If the drive lever 4 moves further in the direction of the arrow 21, the protrusion 6b of the combiner support 6 rotates above the rotation axis 11 while moving upward along the cam surface CS1, and exits the groove 4x of the drive lever 4 upward.

FIG. 3A is a perspective view showing the internal configuration of the HUD 10 in the display operation state. In FIG. 3A, the housing 1 and the cover 8 are omitted for convenience of illustration. FIG. 3B is an enlarged view of the part shown by a dashed-dotted line 24 in FIG. 3A.

As shown in FIG. 3B, the protrusion 6b of the combiner support 6 lies on the horizontal portion 4y in contact with the cam surface CS2 of the drive lever 4 immediately after the transition from the non-display operation state to the display operation state. The positional relationship between the protrusions 6a and 6b of the combiner support 6 in the display operation state is shown by a broken line 25. As shown in FIG. 3B, in the display operation state, the protrusion 6c of the combiner support 6 is engaged with a cam surface CS3 serving as a third surface of a slope portion 4z which serves as a second cam structure. The slope portion 4z is provided near the lower left end of the drive lever 4 on the plane of the drawing, i.e., on the lower near side of the HUD 10 .

The cam surface CS3 may be formed so that its angle with respect to the sliding direction 21 of the drive lever 4 is smaller than that of the cam surface CS1.

The protrusion 6c and the cam surface CS3 do not need to be engaged immediately after the transition from the non-display operation state to the display operation state. That is, for a while after the transition to the display operation state, the protrusion 6b may be in contact with the cam surface CS2 and supported by the cam surface CS2 and the drive lever 4 may be slidable to the near side of the HUD 10. After the protrusion 6c is engaged with the cam surface CS3, the protrusion 6c moves upward along the cam surface CS3 as the drive lever 4 slides to the near side of the HUD 10. The protrusion 6b also moves upward accordingly and moves away from the cam surface CS2.

The protrusion 6c does not need to be engaged with the slope portion 4z as long as the protrusion 6b is in contact with the first surface CS1.

When, As described above, in the HUD 10 according to the invention , the motor 2 is driven the drive lever 4 horizontally moves such that the combiner 5 stands up. During the upstand operation, the drive lever 4 moves the protrusion 6b of the combiner support 6 to rotate so that the combiner 5 protrudes from the housing 1.

An operation (hereinafter, referred to as an "accommodating operation") for shifting the combiner 5 from the display operation state to the non-display operation state will be described below. The accommodating operation is reverse to the foregoing upstand operation. Specifically, the motor 2 is reversely rotated to move the drive lever 4 in a direction opposite to the arrow 21. The protrusion 6b of the combiner support 6 comes into engagement with the groove 4x of the drive lever 4, and the combiner support 6 rotates in a direction opposite to the arrow 23 in FIG. 2B according to the movement of the drive lever 4. The combiner 5 is thereby rotated counterclockwise and retracted into the housing 1. In the accommodating operation, the combiner 5 is retracted into the housing 1 by moving the protrusion 6b.

An angle adjustment operation of the comber 5 in the display operation state will be described. FIG. 4A is a perspective view showing a state of the angle adjustment operation in the display operation state of the HUD 10. In FIG. 4A, the housing 1 and the cover 8 are omitted for convenience of illustration. FIG. 4B is an enlarged view of the part shown by a dashed-dotted line 26 in FIG. 4A.

As shown in FIG. 4B, in the display operation state, the protrusion 6c formed at the bottom end of the combiner support 6 is engaged with the cam surface CS3 of the slope portion 4z of the drive lever 4. The positional relationship between the protrusions 6a and 6c of the combiner support 6 in that situation is shown by a broken line 27. If the drive lever 4 in such a state is moved in the direction of the arrow 21, the protrusion 6c of the combiner support 6 ascends along the cam surface CS3 of the slope portion 4z of the drive lever 4, and the combiner 5 further rotates clockwise accordingly. In other words, the angle of the combiner 5 approaches a perpendicular angle.

On the other hand, if the drive lever 4 in such a state is moved in the direction opposite to the arrow 21, the protrusion 6c of the combiner support 6 descends along the cam surface CS3 of the slope portion 4z of the drive lever 4, and the combiner 5 tilts toward the near side accordingly. In other words, the angle of the combiner 5 in a standing position decreases. In such a manner, the angle of the combiner 5 can be adjusted by horizontally moving the drive lever 4 to the left and right.

As described above, in the angle adjustment operation, after the protrusion 6c is engaged with the cam surface CS3, the protrusion 6c moves upward along the cam surface CS3 as the drive lever 4 slides to the near side of the HUD 10. The protrusion 6b also moves upward accordingly and moves away from the cam surface CS2. That is, during the angle adjustment operation in the display operation state, or equivalently, while the protrusion 6c and the cam surface CS3 are in contact with and engaged with each other, the protrusion 6b is in contact with the cam surface CS2 or lies above the cam surface CS2, i.e., is located on or above the cam surface CS2.

A relationship between the upstand-retracting operation and the angle adjustment of the combiner 5 will be described below. The protrusion 6c formed at the bottom end of the combiner support 6 is at a greater distance from the protrusion 6a than the protrusion 6b is. In other words, the distance from the protrusion 6a functioning as the rotation axis to the protrusion 6b is closer than to the protrusion 6c. In the moving direction of the drive lever 4 shown by the arrow 21, the amount of movement of the protrusion 6b with respect to the amount of movement of the drive lever 4 is thus greater than the amount of movement of the protrusion 6c with respect to the amount of movement of the drive lever 4. In the upstand-retracting operation of the combiner, the combiner 5 can therefore be quickly straightened up and retracted by moving the drive lever 4 at high speed.

The rotation speed of the combiner 5 during angle adjustment can be changed by changing the angle of the cam surface CS3 with respect to the sliding direction 21 or by changing the distance from the rotation axis 11 to the protrusion 6c.

Conversely, in the moving direction of the drive lever 4 shown by the arrow 21, the amount of movement of the protrusion 6c with respect to the amount of movement of the drive lever 4 is smaller than the amount of movement of the protrusion 6b with respect to the amount of movement of the drive lever 4. Considering the protrusion 6a of the combiner support 6 to be the rotation fulcrum, the amount of movement of the protrusion 6c becomes smaller than that of the protrusion 6b and the combiner 5 rotates more gently if the amount of movement of the drive lever 4 is not changed.

That is, in the angle adjustment of the combiner 5, even if the drive lever 4 is moved at the same speed as in the upstand-retraction operation, the amount of movement of the protrusion 6c with respect to the amount of movement of the drive lever 4 is smaller than the amount of movement of the protrusion 6b. The angle of the combiner 5 thus changes gently, which enables fine adjustment.

As described above, in the HUD apparatus 10 according to the embodiment, the motor 2 may be rotated at the same speed to horizontally move the drive lever 4 at the same speed in the upstand-accommodating operation of the combiner 5 and during angle adjustment after the combiner 5 is erected. In the present embodiment, the two different operations, namely, the upstand/accommodating operation and the angle adjustment of the combiner 5 can be switched without changing the speed of the motor 2. The drive lever 4 therefore does not need to be moved at different speeds in the upstand operation and the angle adjustment of the combiner 5. Complicated motor control is not needed, and a motor having a plurality of rotation speeds does not need to be provided, either.

Since the speed of the motor 2 does not need to be changed, unnatural movement of speed change can be suppressed for stable operation. Moreover, the positioning accuracy of the rotation angle position of the combiner unit 5 can be increased, for example, without changing the accuracy of the driving amount control on the motor. The angle adjustment can be more elaborately performed by monitoring the number of rotations of the motor 2.

### [Modification]

In the foregoing embodiment, the drive lever 4 which is the transmission member is horizontally moved by the driving unit 3 along the side surface of the housing 1. However, this is not restrictive, and the drive lever 4 may be moved in parallel with the side surface of the housing 1. The drive lever 4 may be moved in an oblique direction. In the foregoing embodiment, the drive lever 4 which is the transmission member is arranged on either one of the side surfaces of the housing 1. However, drive levers may be respectively provided on both side surfaces.

### REFERENCE SIGNS LIST

- 1: housing
- 2: motor
- 3: driving unit
- 4: drive lever
- 4x: groove
- 4y: horizontal portion
- 4z: slope portion
- 5: combiner
- 6: combiner support
- 8: cover
- SR: side portion
- SP: side plate portion
- CM: cam structure
- CS1: cam surface
- CS2: cam surface
- CS3: cam surface

## Claims

1. A display apparatus comprising:
a housing having a pair of opposed side surfaces;
a display member;
a support member configured to support said display member, said support member being held by said housing so as to be rotatable about a rotation axis; and
a transmission member configured to be slidable along a side surface of said housing and engaged with said support member, wherein
said support member includes a first fulcrum that is located a first distance away from said rotation axis and comes into engagement with said transmission member, and a second fulcrum that is located a second distance away from said rotation axis and comes into engagement with said transmission member, said second distance being greater than said first distance.

2. The display apparatus according to claim 1, wherein said transmission member includes a first cam structure and a second cam structure, said first fulcrum comes into engagement with said first cam structure, and said second fulcrum comes into engagement with said second cam structure.

3. The display apparatus according to claim 2, wherein said first cam structure includes a first surface extending at an angle with respect to a sliding direction of said transmission member and a second surface extending at an angle smaller than that of said first surface with respect to said sliding direction of said transmission member, and said first fulcrum is located on said second surface of said first cam structure when said second fulcrum and said second cam structure are engaged with each other.

4. The display apparatus according to claim 3, wherein said second surface extends in a direction parallel to a moving direction of said transmission member.

5. The display apparatus according to claim 3 or 4, wherein said second cam structure includes a third surface that comes into engagement with said second fulcrum, and an angle of said third surface with respect to said sliding direction of said transmission member is smaller than said angle of said first surface of said first cam structure with respect to said slide direction of said transmission member.

6. The display apparatus according to claim 5, wherein said first surface is a surface perpendicular to said sliding direction of said transmission member.
